# EUROPÄISCHE PATENTSCHRIFT

(11) **EP 4 302 174 B1**
(45) Veröffentlichungstag und Bekanntmachung des Hinweises auf die Patenterteilung: **14.01.2026**
(21) Anmeldenummer: 22710321.5
(22) Anmeldetag: 16.02.2022
(51) Int. Cl.: B60K 35/10, B60K 35/28, B60K 35/29, G06F 3/01, G06V 20/59, G06F 3/0488

(54) **ERFASSEN VON NUTZEREINGABEN IN EINEM KRAFTFAHRZEUG UNTER ERMITTLUNG EINER ZULÄSSIGKEIT DER NUTZEREINGABE**
DETECTING USER INPUT IN A MOTOR VEHICLE AND DETERMINING A PERMISSIBILITY OF THE USER INPUT
DÉTECTION DE L'ENTRÉE D'UN UTILISATEUR DANS UN VÉHICULE AUTOMOBILE AVEC DÉTERMINATION DE L'ADMISSIBILITÉ DE L'ENTRÉE DE L'UTILISATEUR

(30) Priorität: 01.03.2021 DE 102021201929
(43) Veröffentlichungstag der Anmeldung: 10.01.2024
(73) Patentinhaber: VOLKSWAGEN AKTIENGESELLSCHAFT, 38440 Wolfsburg (DE)
(72) Erfinder: GÜNZEL, Thorben, 31226 Peine (DE)
(86) Internationale Anmeldenummer: PCT/EP2022/053736
(87) Internationale Veröffentlichungsnummer: WO 2022/184428

(56) Entgegenhaltungen:
- DE-U1- 202017 105 761
- US-A1- 2013 144 463
- US-A1- 2016 155 326
- US-A1- 2017 282 717

## Beschreibung

Die Erfindung betrifft ein Verfahren und eine Anordnung zum Erfassen von Nutzereingaben in einem Kraftfahrzeug, wie beispielsweise einem Personenkraftwagen oder einem Lastkraftwagen.

In Kraftfahrzeugen werden verschiedenartigste Eingabeeinrichtungen (oder, mit anderen Worten, Bedieneinrichtungen oder -schnittstellen) bereitgestellt. Über diese kann ein Nutzer, der hierin allgemein der Fahrer des Kraftfahrzeugs sein kann oder aber ein Beifahrer, Eingaben tätigen. Bekannt sind haptische Bedienelemente, wie z.B. Schalter, Druckknöpfe, Schieberegler oder Hebel. Ebenso bekannt sind berührungsempfindliche Schnittstellen, insbesondere in Form berührungsempfindlicher Anzeigeeinrichtungen und dann auch als Touch-Screen bezeichnet. Dort werden typischerweise virtuelle Bedienelemente angezeigt, deren Berührung durch einen Nutzer erfassbar ist, woraufhin eine mit dem berührten Bedienelement assoziierte Aktion ausführbar ist.

Zum Betätigen von berührungsempfindlichen Schnittstellen muss der Nutzer, vor allem wenn es sich um eine berührungsempfindliche Anzeigeeinrichtung handelt, typischerweise seinen Blick auf die Schnittstelle richten und somit zumindest kurzzeitig von der Umgebung abwenden. Dies liegt beispielsweise darin begründet, dass die virtuellen Bedienelemente je nach zu betätigender Funktion (z.B. Klimaregelung, Bedienung eines Audiosystems, Eingabe von Routenwünschen) an unterschiedlichen Positionen der Schnittstelle eingeblendet bzw. angezeigt werden können. Der Nutzer muss also den aktuellen Zustand der Schnittstelle und insbesondere die Position der eingeblendeten virtuellen Bedienelemente meist zunächst visuell erfassen, um diese anschließend betätigen zu können. Findet dies im laufenden Straßenverkehr und insbesondere während einer Fahrt des Kraftfahrzeugs statt, kann dies ein erhebliches Sicherheitsrisiko bedeuten.

Aus der DE 10 2010 053 788 A1 und DE 10 2010 019 985 B4 sind Lösungen bekannt, um die Bedienbarkeit einer berührungsempfindlichen Schnittstelle durch einen Fahrzeuginsassen situationsabhängig einzuschränken.

Auch mit diesen vorbekannten Ansätzen ist aber eine Sicherheitsverbesserung nicht ohne Weiteres erzielbar. So kann es für einen Fahrer irritierend sein, wenn die berührungsempfindliche Schnittstelle situationsabhängig und insbesondere lediglich temporär nicht oder nur eingeschränkt betätigbar ist. In diesem Fall kann der Fahrer z.B. eine Fehlfunktion oder auch Fehleingabe durch ihn selbst vermuten. Dies kann eine Irritation bedeuten, die den Fahrer zusätzlich von der Verkehrsumgebung ablenkt, insbesondere wenn er beginnt, eine mögliche Fehlerursache für eine ausbleibende erwartete Reaktion der Schnittstelle näher zu untersuchen.

Aus der US 2017/0282717 A1 ist ein Verfahren zum Erfassen von Nutzereingaben in einem Kraftfahrzeug bekannt. Dabei wird ein Zustand ermittelt, in dem eine Nutzereingabe mittels einer berührungsempfindlichen Schnittstelle unzulässig ist und in Reaktion darauf die Möglichkeit zur Vornahme der Nutzereingabe mittels der berührungsempfindlichen Schnittstelle gesperrt wird. Zusätzlich erfolgt dann ein automatisches Aktivieren wenigstens einer alternativen Eingabemöglichkeit zur Vornahme der Nutzereingabe unabhängig von der berührungsempfindlichen Schnittstelle. Alternativ erfolgt ein Hinweis an den Nutzer, mit dem dieser auf die alternative Eingabemöglichkeit hingewiesen wird. Die berührungsempfindliche Schnittstelle wird beispielsweise gesperrt, wenn der Nutzer länger als eine vorgegebene Zeit auf die Schnittstelle blickt, ohne eine Eingabe vorzunehmen.

Aus der DE 20 2017 105 761 U1 ist ein Computergerät für ein Kraftfahrzeug bekannt, wobei eine Sperrung des Zugangs zur Benutzeroberfläche in Abhängigkeit eines Aufmerksamkeitsgrades eines Nutzers erfolgt.

Aus der US 2013/0144463 A1 ist eine konfigurierbare Benutzeroberfläche in einem Kraftfahrzeug bekannt.

Aus der US 2016/0155326 A1 ist ein Verkehrssystem zur Steuerung automatisiert fahrender Fahrzeuge bekannt.

Es besteht somit ein Bedarf dafür, die Betriebssicherheit von Kraftfahrzeugen im Zusammenhang mit dem Betätigen berührungsempfindlicher Schnittstellen zu verbessern.

Diese Aufgabe wird durch die Gegenstände der beigefügten unabhängigen Ansprüche gelöst. Vorteilhafte Weiterbildungen sind in den abhängigen Ansprüchen angegeben.

Allgemein sieht die Erfindung vor, zur Sicherheitsverbesserung nicht lediglich die Betätigbarkeit der berührungsempfindlichen Schnittstelle temporär einzuschränken, sondern auch eine alternative Eingabemöglichkeit automatisch zu aktivieren und/oder dem Nutzer vorzuschlagen. Diese alternative Eingabemöglichkeit, bei der der Fahrer vorzugsweise unabhängig von der berührungsempfindlichen Schnittstelle Eingaben tätigen kann, ermöglicht zudem vorzugsweise eine bessere visuelle Überwachung der Verkehrsumgebung durch den Nutzer. Insbesondere kann es bei dieser Eingabeeinrichtung weniger wahrscheinlich oder auch nicht erforderlich sein, dass ein Nutzer seinen Blick über einen längeren Zeitraum von beispielsweise mehreren Sekunden (insbesondere mehr als 5 Sekunden) von der Verkehrsumgebung abwendet.

Anders ausgedrückt erfolgt im Rahmen der hierin offenbarten Lösung vorzugsweise ein automatisches Aktivieren und/oder automatisches Umschalten von der Betätigbarkeit der berührungsempfindlichen Schnittstelle auf eine alternative Eingabemöglichkeit und/oder Eingabeeinrichtung, wobei der Fahrer über diese alternative Eingabemöglichkeit vorzugsweise gesondert in Kenntnis gesetzt wird. Da der Fahrer somit die gewünschte Eingabe nach wie vor tätigen kann und vorzugsweise auch mitgeteilt bekommt, mittels welcher Eingabemöglichkeit er dies tun kann, erhöht sich die Wahrscheinlichkeit, dass er sich in höherem Ausmaße und/oder nach einer kürzeren Zeitdauer wieder auf die Verkehrsumgebung konzentrieren kann. Von dieser kann er folglich nur kurzzeitig oder auch gar nicht abgelenkt werden.

Insbesondere vorgeschlagen wird ein Verfahren zum Erfassen von Nutzereingaben in einem Kraftfahrzeug, mit:
- Ermitteln eines Zustandes, in dem eine Nutzereingabe mittels einer berührungsempfindlichen Schnittstelle (des Kraftfahrzeugs und/oder bevorzugt in Form eines Touch-Screens oder einer berührungsempfindlichen Anzeigeeinrichtung) unzulässig ist;
und in Reaktion darauf
- Sperren (oder, mit anderen Worten, Unterbinden oder Deaktivieren) der Möglichkeit zur Vornahme der Nutzereingabe mittels der berührungsempfindlichen Schnittstelle;
und wobei das Verfahren zusätzlich wenigstens eine der folgenden Maßnahmen umfasst:
a) automatisches (oder, mit anderen Worten, nutzer- oder fahrerunabhängiges) Aktivieren wenigstens einer alternativen Eingabemöglichkeit zur Vornahme der Nutzereingabe unabhängig von der berührungsempfindlichen Schnittstelle;
b) Ausgeben eines Hinweises an den Nutzer zur Vornahme der Nutzereingabe mittels einer alternativen Eingabemöglichkeit (insbesondere der etwaigen automatisch aktivierten Eingabemöglichkeit gemäß a)), die unabhängig von der berührungsempfindlichen Schnittstelle ist,
wobei die Unzulässigkeit der Nutzereingabe unter Berücksichtigung einer maximal zulässigen Eingabezeit und einer erwarteten Eingabezeit ermittelt wird, wobei die Unzulässigkeit der Nutzereingabe dann ermittelt wird, wenn die erwartete Eingabezeit die maximale Eingabezeit übersteigt.

Das automatische und somit selektive Aktivieren der alternativen Eingabemöglichkeit kommt insbesondere für Eingabemöglichkeiten in Betracht, die lediglich selektiv zum Erfassen von Nutzereingaben aktivierbar sind. Beispielsweise können derartige Eingabemöglichkeiten zumindest temporär in einem Bereitschaftsmodus (Stand-by-Modus) betrieben werden, in dem sie z.B. keine Eingaben unmittelbar erfassen oder damit verknüpfte Aktionen vom Fahrzeugsystem veranlassen können. Stattdessen können sie lediglich selektiv diesen Modus verlassen und für ein tatsächliches Erfassen von Eingaben aktiviert werden (d.h. von Eingaben, die sich auf Aktionen richten, die sich vom Beenden des Bereitschaftsmodus unterscheiden).

Ein Beispiel hierfür ist eine Spracherkennung. Diese kann in an sich bekannter Weise und auch im Rahmen der hierin offenbarten Lösung vorzugsweise erst dann eine Nutzereingabe bzw. einen Nutzerbefehl erfassen, wenn zuvor eine vorbestimmte Spracheingabe getätigt wurde, mittels derer die Spracherkennung zum tatsächlichen Erfassen und Umsetzen von Nutzereingaben aktiviert wurde und/oder mittels derer ein Bereitschaftsmodus der Spracherkennung unterbrochen wird.

Zusätzlich können aber auch Eingabemöglichkeiten vorgesehen sein, die beim Betrieb des Kraftfahrzeugs dauerhaft aktiv sind und nicht erst gesondert bei Erkennung des obigen Zustandes der Unzulässigkeit von Nutzereingaben aktiviert werden müssen. Beispiele sind haptische Bedienelemente oder Bedienelemente zum Erfassen von Gesten (allgemein auch als Gestensteuerung bezeichnet).

Insbesondere in dem letztgenannten Fall (aber nicht beschränkt hierauf) einer dauerhaft aktiven alternativen Eingabemöglichkeit kann es für den Nutzer hilfreich sein, die Ausgabe eines Hinweises betreffend die alternative Eingabemöglichkeit zu erhalten. Allgemein kann dieser Hinweis derart erfolgen, dass der Nutzer Kenntnis darüber erlangt, welche alternative Eingabemöglichkeit zur Verfügung steht und/oder allgemein dass die berührungsempfindliche Schnittstelle nicht für die Nutzereingabe verfügbar ist. Daraufhin kann er z.B. in Kenntnis weiterer Eingabemöglichkeiten selbständig nach diesen suchen. Bevorzugt sieht die hierin offenbarte Lösung aber vor, dass der Fahrer sowohl einen Hinweis darüber erhält, dass die berührungsempfindliche Schnittstelle nicht verfügbar ist, als auch, dass und insbesondere welche alternative Eingabemöglichkeit er stattdessen bevorzugt nutzen soll.

Allgemein kann das Verfahren auch umfassen, dass die aktuell vom Nutzer gewünschte Nutzereingabe ermittelt wird und daraufhin (und insbesondere bei Ermitteln des obigen Unzulässigkeits-Zustandes) ermittelt wird, welche alternative Eingabemöglichkeit zur Verfügung steht. Dann kann bedarfsweise das hierin geschilderte automatische Aktivieren und/oder Ausgeben eines Hinweises in Abhängigkeit der ermittelten alternativen Eingabemöglichkeit erfolgen.

Allgemein kann die hier vorgestellte Lösung umfassen, dass die vom Nutzer aktuell geplante (oder, mit anderen Worten, gewünschte oder beabsichtigte) Nutzereingabe ermittelt oder zumindest abgeschätzt wird. Beispielsweise kann dies anhand eines vom Nutzer aufgerufenen Menüpunktes, virtuellen zuvor betätigten Bedienelementen oder allgemein eines Funktionsmenüs erfolgen, das dem Nutzer mittels der berührungsempfindlichen Schnittstelle angezeigt und/oder von diesem aufgerufen wird. Beispielsweise kann ermittelt werden, ob der Nutzer aktuell ein Audiomenü oder ein Klimatisierungsmenü aufruft oder bedienen möchte. Wie hierin noch erläutert, kann darauf basierend abgeschätzt werden, welche Komplexität und/oder welche Bediendauer mit dieser voraussichtlich beabsichtigten Nutzereingabe oder auch möglichen nachfolgenden Nutzereingaben einhergeht, um eine etwaige Unzulässigkeit hiervon abzuschätzen. Ebenso kann diese Kenntnis aber dazu genutzt werden, eine geeignete alternative Eingabemöglichkeit zu identifizieren.

Wie bereits erwähnt, kann es sich bei der alternativen Eingabemöglichkeit um eine Spracherkennung handeln bzw. eine Spracherkennungseinrichtung. Letztere kann gemäß jeglichem bekannten Ansatz aus dem Stand der Technik ausgebildet sein. Es kann sich um eine Anordnung mit einer Steuereinrichtung handeln, die ferner eine Mikrofoneinrichtung aufweist oder mit einer solchen verbunden ist, um Sprachbefehle eines Nutzers aufzunehmen und zu erhalten. Die Steuereinrichtung kann dazu eingerichtet sein, die erhaltenen Sprachbefehle zu analysieren und insbesondere deren (semantischen) Inhalt zu erfassen.

Zusätzlich oder alternativ kann die alternative Eingabemöglichkeit eine Gestenerfassung umfassen. Die Gestenerfassung kann mittels jeglicher aus dem Stand der Technik bekannten Gestenerfassungseinrichtung umgesetzt werden. Beispielsweise kann die Gestenerfassungseinrichtung wenigstens einen optischen Sensor und eine Steuereinrichtung aufweisen. Nach Maßgabe von Erfassungssignalen des optischen Sensors (der insbesondere eine Kamera sein kann) kann die Steuereinrichtung bevorzugt dazu eingerichtet sein, Gesten vorbestimmter Art sowie damit zusammenhängende auszuführende Aktionen zu erfassen. Beispielsweise können als Gesten Wischbewegungen, Schiebebewegungen und/oder annähernde oder sich entfernende Bewegungen von bevorzugt wenigstens einer Hand eines Nutzers ermittelt werden.

Eine Weiterbildung sieht vor, dass der Hinweis betreffend die alternative Eingabemöglichkeit haptisch, audiobasiert (bzw. hörbar oder akustisch) und/oder visuell ist. Wie erwähnt, kann dieser Hinweis primär zum Ziel haben, das Vorhandensein der alternativen Eingabemöglichkeit zu signalisieren und/oder eine Nicht-Verfügbarkeit der berührungsempfindlichen Schnittstelle zur Vornahme einer Nutzereingabe. Der haptische Hinweis kann die Ausgabe von Vibrationssignalen umfassen, beispielsweise durch Erzeugen einer Vibration der berührungsempfindlichen Schnittstelle, wenn der Nutzer diese berührt. Ein audiobasierter Hinweis kann ein Ausgeben von Signaltönen oder Sprachausgaben umfassen. Im letzteren Fall kann z.B. konkret die alternative Eingabemöglichkeit benannt werden, die der Nutzer statt der berührungsempfindlichen Schnittstelle verwenden soll. Der visuelle Hinweis kann das Ausgeben von Lichtsignalen oder konkreten visuellen Informationen umfassen, beispielsweise durch Erzeugen visuell wahrnehmbarer Anzeigen mittels der berührungsempfindlichen Schnittstelle. Ebenso können Bereiche zur Gestenerfassung visuell (insbesondere mittels Lichtsignalen) hervorgehoben und/oder beleuchtet werden.

Im Falle des Anzeigens visueller Informationen als Hinweis ist bevorzugt, dass dieser Hinweis mittels einer Schnittstelle ausgegeben wird, die nah zu einem Sichtfeld des Fahrers ist oder sich mit diesem überlappt, wenn der Fahrer seinen Blick in die Fahrzeugumgebung richtet. Insbesondere kann hierfür ein Anzeigen des Hinweises mittels einer Head-up-Displayeinrichtung vorgesehen sein. Alternativ oder zusätzlich kann auch eine Anzeige per Schnittstelle einer Instrumententafel und/oder eines Kombiinstruments erfolgen, insbesondere wenn diese Instrumententafel bzw. das Kombiinstrument digital ausgebildet sind (d.h. dortige Instrumente lediglich digital bzw. virtuell erzeugt und angezeigt werden, nicht aber beispielsweise analoge bewegbare Zeiger oder dergleichen aufweisen).

In einer alternativen Ausführungsform kann der Hinweis zusätzlich eine Aufforderung zur Übernahme der Fahraufgabe umfassen. Hierzu kann ein akustischer und/oder optischer Hinweis nah zu einem Sichtfeld des Fahrers erfolgen. Alternativ oder zusätzlich kann der Hinweis auch haptisch an einem Bedienelement der primären Fahraufgabe (z.B. Lenkrad, Gaspedal, Bremspedal) erfolgen. Dies soll bevorzugt dazu dienen, dass sich der Fahrer zunächst der Fahraufgabe widmet, bevor ihm die weitere Bedienung über wenigstens eine alternative Eingabemöglichkeit angeboten wird.

Eine Weiterbildung sieht vor, dass die alternative Eingabemöglichkeit einen gleichartigen Eingabezustand aufweist (oder an denselben Eingabezustand anknüpft), wie ihn die berührungsempfindliche Schnittstelle vor deren Sperren aufgewiesen hat oder aufgewiesen hätte (z.B. da sie ohne Sperren zu diesem Zustand insbesondere unmittelbar gewechselt hätte). Anders ausgedrückt kann die alternative Eingabemöglichkeit bevorzugt automatisch dieselbe Eingabeart, Eingabeoptionen oder allgemein eine Bedienung identischer Funktionen ermöglichen, wie dies mit der gesperrten Eingabemöglichkeit möglich gewesen wäre. Aus Sicht des Nutzers kann somit eine gewünschte Bedienung nahtlos fort- oder umgesetzt werden.

Weiter sieht die Erfindung vor, dass die Unzulässigkeit der Nutzereingabe unter Berücksichtigung einer maximal zulässigen Eingabezeit ermittelt wird. Insbesondere kann anhand der maximal zulässigen Eingabezeit beurteilt werden, ob es dem Nutzer ermöglicht werden soll, die Nutzereingabe per berührungsempfindlicher Schnittstelle vorzunehmen oder nicht. Überschreitet die maximal zulässige Eingabezeit einen zulässigen Schwellenwert, kann eine Unzulässigkeit der Nutzereingabe ermittelt werden. Die maximal zulässige Eingabezeit wird mit einer erwarteten Eingabezeit der nachstehend geschilderten Art verglichen und basierend auf diesem Vergleich die Zulässigkeit oder Unzulässigkeit der Nutzereingabe festgestellt.

Die maximal zulässige Eingabezeit gibt bevorzugt diejenige akzeptable Eingabezeit an, die insbesondere aufgrund einer aktuellen Betriebssituation akzeptabel scheint, um eine Nutzereingabe zu tätigen. Anders ausgedrückt kann hierdurch die maximal zulässige Zeit beziffert werden, innerhalb derer ein Nutzer sich auf die berührungsempfindliche Schnittstelle (visuell) fokussieren kann und beispielsweise nicht zwangsläufig in die Fahrzeugumgebung blicken muss. Bevorzugt fällt diese Zeit umso höher aus, desto geringer die Anforderungen an die Aufmerksamkeit des Fahrers in Anbetracht einer aktuellen Betriebssituation sind, also beispielsweise desto unkritischer diese aktuelle Betriebssituation hinsichtlich der Fahrsicherheit ist.

Gemäß einer bevorzugten Variante wird die maximal zulässige Eingabezeit auf Basis von einer Verkehrswegeeigenschaft ermittelt. Hierbei kann es sich um einen aktuell vom Fahrzeug befahrenen Verkehrsweg handeln, also insbesondere die aktuell befahrene Straße oder die aktuell befahrene Fahrbahn. Die Eigenschaft kann insbesondere eine Ausrichtung und/oder einen Verlauf und/oder eine Kurvenhäufigkeit oder ein Kurvenausmaß dieses Verkehrsweges betreffen. Je mehr Kurven und/oder desto unstetiger oder weniger geradlinig der Verlauf des Verkehrswegs ist, was jeweils eine beispielhafte Verkehrswegeeigenschaft sein kann, desto geringer kann die maximal zulässige Eingabezeit ausfallen.

Weitere mögliche Verkehrswegeeigenschaften, die allein oder in Kombination mit jeglichen weiteren hierin genannten Verkehrswegeeigenschaften berücksichtigt werden können, betreffen den Fahrbahntyp (z.B. Landstraße, Innerorts-Straße oder Autobahn). Je höher die mit einem entsprechenden Fahrbahntyp assoziierte Geschwindigkeit und/oder erforderliche Aufmerksamkeit eines Fahrers ist, desto geringer kann die maximal zulässige Eingabezeit gewählt sein (beispielsweise geringer für eine Autobahn im Vergleich zu einer Innerorts-Straße). Diese Eigenschaft ist beispielsweise anhand von Kartendaten ermittelbar.

Zusätzlich oder alternativ kann der Fahrbahnzustand als Verkehrswegeeigenschaft berücksichtigt werden. Der Fahrbahnzustand kann z.B. eine Geschlossenheit der Fahrbahnoberfläche und/oder allgemein deren Qualität oder Hindernishäufigkeit betreffen (z.B. aufgrund von Schlaglöchern, Rissen oder dergleichen). Der Fahrbahnzustand kann erneut anhand von Kartendaten oder einer vergleichbaren Datensammlung ermittelt werden und/oder mittels einem Fahrzeugsensor (beispielsweise einer Kamera oder aber einem Sensor eines Feder-Dämpfer-Systems, der Einfedereigenschaften während der Fahrt ermittelt). Je kritischer der Fahrbahnzustand, desto geringer kann die zulässige Eingabezeit ausfallen.

Zusätzlich oder alternativ können als Verkehrswegeeigenschaften Verkehrsschilder oder anderweitige vordefinierte Verkehrsinfrastrukturmerkmale erfasst werden (z.B. Bahnübergänge, Ampeln, Fußgängerüberwege, Parkplatzbereiche oder dergleichen). Je nach den erkannten Verkehrsschildern können Situationen oder Zustände identifiziert werden, in denen erhöhte Aufmerksamkeiten erforderlich und in denen entsprechend geringe zulässige Eingabezeiten vorzusehen sind.

Weiter zusätzlich oder alternativ kann als Verkehrswegeeigenschaft die Bekanntheit des Verkehrsweges (oder auch allgemein einer Strecke) für den Fahrer ermittelt werden. Hierfür kann auf bevorzugt personalisierte Daten des Fahrers zurückgegriffen werden, die beispielsweise angeben, wie häufig ein Fahrer die aktuelle Strecke bzw. den aktuellen Verkehrsweg bereits befahren hat. Je höher die Bekanntheit, desto länger kann die maximal zulässige Eingabezeit ausfallen.

Zusätzlich oder alternativ kann die maximal zulässige Eingabezeit auf Basis von einer Wettereigenschaft ermittelt werden. Die Wettereigenschaft kann z.B. das Ausmaß von Niederschlag, von Schneefall, von Nebelbildung oder von einer Straßenglätte betreffen. Je höher bzw. kritischer die jeweils vorstehend genannten Größen bzw. Wettereigenschaften sind, desto geringer kann die maximal zulässige Eingabezeit ausfallen. Wettereigenschaften jeglicher hierin geschilderten Art können sensorisch erfasst werden, beispielsweise mittels eines Niederschlagssensors, eines Umgebungslichtsensors oder eines Fahrzeugumgebungssensors (z.B. einem Abstandssensor, insbesondere einem Lidar-Sensor). Auch können derartige Informationen von fahrzeugexternen Diensten bezogen werden. Auch können sie mittelbar aus Betriebszuständen z.B. einer Scheibenwischereinrichtung abgeleitet werden.

Zusätzlich oder alternativ kann die maximal zulässige Eingabezeit auf Basis von einer Verkehrssituationseigenschaft ermittelt werden. Eine beispielhafte Verkehrssituationseigenschaft ist die aktuelle eigene Fahrzeuggeschwindigkeit, das Vorhandensein von Objekten in der Umgebung (beispielsweise erfassbar mittels jeglichen Umgebungssensoren des Fahrzeugs gemäß Stand der Technik) und/oder dem Vorhandensein und insbesondere der Anzahl und/oder Geschwindigkeit von anderen Verkehrsteilnehmern in der Fahrzeugumgebung (wiederum erfassbar mittels gängigen Fahrzeug-Umgebungssensoren). Zusätzlich oder alternativ kann als Verkehrssituationseigenschaft eine Nähe zu Unfallschwerpunkten ermittelt werden, beispielsweise anhand einer entsprechenden Datensammlung. Je höher die Fahrzeuggeschwindigkeit, je größer die Anzahl von und/oder Nähe zu anderen Verkehrsteilnehmern oder Objekten und desto größer die Nähe zu Unfallschwerpunkten, desto geringer kann die maximal zulässige Eingabezeit gewählt sein.

Ferner zusätzlich oder alternativ kann die maximal zulässige Eingabezeit unter Berücksichtigung von einem Betriebszustand von wenigstens einem Fahrerassistenzsystem ermittelt werden. Fahrerassistenzsysteme können den Fahrer bei der Fahrzeugführung unterstützen. Sie können gemäß jeglichen Varianten des Standes der Technik ausgebildet sein, insbesondere in Form sogenannter Spurhalte-, Abstandshalte-, Tempomat- oder Spurwechselassistenten. Da die Fahrerassistenzsysteme allgemein einen Fahrer von einer sicheren Fahrzeugführung zumindest teilweise entlasten und/oder ihn hierbei zusätzlich unterstützen, kann dann, wenn wenigstens ein Fahrerassistenzsystem einen definierten (insbesondere aktiven) Zustand aufweist, die maximal zulässige Eingabezeit geringer gewählt werden. Allgemein kann je nach Anzahl und/oder je nach Umfang der aktiven Fahrerassistenzsysteme die Eingabezeit gewählt werden und insbesondere bei großer Anzahl und großem Umfang reduziert werden.

Neben dem Betriebszustand vom Fahrerassistenzsystem kann darüber hinaus auch der Automatisierungsgrad des wenigstens einen (bevorzugt aktuell aktiven) Fahrerassistenzsystems bei der Ermittlung der maximal zulässigen Eingabezeit berücksichtigt werden. Die Automatisierungsgrade sind etwa in der SAE J3016 in fünf Level unterteilt. Je höher der Automatisierungsgrad, desto höher kann die zulässige Eingabezeit sein, da z.B. Fahraufgaben in zunehmendem Ausmaß zumindest teilweise von dem Fahrerassistenzsystem übernommen werden können.

Zusätzlich kann auch wenigstens eine Einstellung des wenigstens einen Fahrerassistenzsystems bei der Ermittlung der maximal zulässigen Eingabezeit berücksichtigt werden. So kann z.B. beim Abstandshaltesystem der eingestellte Soll-Abstand zum vorausfahrenden Fahrzeug oder der Grad der Spurhalteunterstützung (z.B. hochgradig unterstützende Spurmittenführung oder weniger unterstützende Spurverlassenswarnung) berücksichtigt werden. Bevorzugt gilt: Je größer der Soll-Abstand oder je höher der Grad der Spurhalteunterstützung, desto größer die zulässige Eingabezeit.

Die erwartete Eingabezeit kann beispielsweise auf Basis von einem Alter des Nutzers ermittelt werden. Derartige, aber auch jegliche andere hierin erwähnten personenspezifischen Eigenschaften können anhand einer entsprechenden Datensammlung ermittelt werden. Beispielsweise kann ein Nutzer aufgefordert werden, sich mittels einer ihm zugeordneten eindeutigen elektronischen Identität anzumelden und/oder zu registrieren. Meldet sich der Nutzer hierdurch z.B. als aktueller Fahrer eines Kraftfahrzeugs an (z.B. durch Registrierung über ein virtuelles Zugangsportal, das beispielsweise über die berührungsempfindliche Schnittstelle zugänglich ist, und/oder über ein mobiles Endgerät des Nutzers, das mit dem Fahrzeug koppelbar ist (insbesondere ein Smartphone)), können mit der elektronischen Identität verknüpfte Informationen ausgelesen und in jeglicher hierin geschilderten Weise verwendet werden. Ein Teil dieser Informationen kann eine Altersangabe des Nutzers sein.

Bevorzugt gilt, dass je höher das Alter des Nutzers ist, desto höher ist auch die erwartete Eingabezeit für eine konkrete oder auch allgemein jegliche Eingabe mittels der berührungsempfindlichen Schnittstelle.

Alternativ oder zusätzlich können historische Daten betreffend Eingabezeiten eines konkreten Nutzers der Ermittlung der erwarteten Eingabezeit zugrunde gelegt werden. Auch in diesem Fall können die historischen Daten einer elektronischen Identität eines bestimmten Nutzers zugeordnet und außerhalb oder aber innerhalb des Fahrzeugs gespeichert werden. Die historischen Daten spiegeln bevorzugt in der Vergangenheit von dem konkreten Nutzer benötigte Eingabezeiten zur Vornahme einer bestimmen (insbesondere aktuell anstehenden) Eingabe in die bzw. mittels der berührungsempfindlichen Schnittstelle wider. Je größer diese Eingabezeiten, desto höher fällt bevorzugt die erwartete Eingabezeit aus. Insbesondere kann die erwartete Eingabezeit einer historischen durchschnittlichen Eingabezeit gleichgesetzt werden.

Zusätzlich oder alternativ kann die erwartete Eingabezeit auf Basis eines Aufmerksamkeitskennwertes des Nutzers ermittelt werden. Der Aufmerksamkeitskennwert kann insbesondere eine Müdigkeit des Nutzers beziffern oder klassifizieren. Jegliche Lösung des Standes der Technik zum Ermitteln eines solchen Müdigkeits- oder allgemein Aufmerksamkeitskennwerts kann verwendet werden. Insbesondere ist es bekannt, anhand von Verhaltensparametern und/oder Augenaktivitäten eines Nutzers, wie beispielsweise per Innenraumkamera erfassbar, einen Aufmerksamkeitskennwert des Nutzers zu ermitteln. Bevorzugt gilt, dass je höher der Aufmerksamkeitskennwert, desto geringer ist die erwartete Eingabezeit.

Ferner zusätzlich oder alternativ kann die erwartete Eingabezeit unter Berücksichtigung der Art der erwarteten Eingabe ermittelt werden. Hierunter kann insbesondere die per erwarteter Eingabe bediente Funktion und/oder das entsprechende Funktionsmenü verstanden werden, also beispielsweise ob der Nutzer aktuell ein Audiosystem oder eine Klimaanlage des Kraftfahrzeugs bedienen möchte. Je nach der Art der erwarteten Eingabe können z.B. vorab ermittelte erwartete Eingabezeiten hinterlegt und im späteren Betrieb der dann ermittelten erwarteten Eingabezeit zugrunde gelegt und/oder dieser gleichgesetzt werden. Diese erwartete Eingabezeit wird bevorzugt nicht nutzerspezifisch, sondern allgemein z.B. basierend auf Erfahrungswerten ermittelt.

Allgemein kann vorgesehen sein, dass jegliche der vorstehend geschilderten Größen oder Parameter zum Ermitteln der erwarteten Eingabezeit auch miteinander kombiniert und/oder verrechnet werden. Beispielsweise können Gewichtungsfaktoren z.B. in Anbetracht eines Alters des Nutzers oder von dessen Aufmerksamkeitskennwert ermittelt werden.

Dabei wird eine Unzulässigkeit der Nutzereingabe dann ermittelt, wenn die erwartete Eingabezeit die zulässige Eingabezeit übersteigt. In diesem Zusammenhang kann auch vorgesehen sein, dass für die Ermittlung der Unzulässigkeit die erwartete Eingabezeit die zulässige Eingabezeit um ein Mindestmaß übersteigen muss. Dieser Vergleich ist schnell und zuverlässig durchführbar, sodass das Ermitteln der Unzulässigkeit entsprechend präzise und aufwandsarm erfolgen kann.

Die Erfindung betrifft auch eine (bevorzugt computergestützte und/oder elektrisch oder digital betreibbare) Anordnung zum Erfassen von Nutzereingaben in einem Kraftfahrzeug. Diese Anordnung kann prinzipiell dazu eingerichtet sein, ein Verfahren gemäß jeglichen hierin geschilderten Varianten auszuführen und kann hierfür jegliche benötigte Einheiten (insbesondere sensorische Einheiten), Datensammlungen oder anderweitige Merkmale aufweisen.

Die Anordnung weist eine berührungsempfindliche Schnittstelle der vorstehend geschilderten Art auf, eine von der berührungsempfindlichen Schnittstelle unabhängig bedienbare (und/oder unabhängig ausgebildete oder bereitgestellte) Eingabeeinrichtung und eine Steuereinrichtung auf, die dazu eingerichtet ist, einen Zustand zu ermitteln, in dem eine Nutzereingabe mittels der berührungsempfindlichen Schnittstelle unzulässig ist, und in Reaktion darauf die Möglichkeit zur Vornahme der Nutzereingabe mittels der berührungsempfindlichen Schnittstelle zu sperren. Ferner ist die Steuereinrichtung dazu eingerichtet, wenigstens eine der folgenden Maßnahmen zu veranlassen:
a) automatisches Aktivieren wenigstens einer alternativen Eingabemöglichkeit zur Vornahme der Nutzereingabe unabhängig von der berührungsempfindlichen Schnittstelle;
b) Ausgeben eines Hinweises an den Nutzer zur Vornahme der Nutzereingabe mittels einer alternativen Eingabemöglichkeit, die unabhängig von der berührungsempfindlichen Schnittstelle ist,
wobei die Unzulässigkeit der Nutzereingabe unter Berücksichtigung einer maximal zulässigen Eingabezeit und einer erwarteten Eingabezeit ermittelt wird, wobei die Unzulässigkeit der Nutzereingabe dann ermittelt wird, wenn die erwartete Eingabezeit die maximale Eingabezeit übersteigt.

Für das Ausgeben des Hinweises kann die Anordnung jegliche hierin erwähnte zusätzliche Einheit umfassen, beispielsweise eine Lichtquelle oder Schnittstelle zum Ausgeben visueller Hinweise, eine Vibrationseinheit zum Erzeugen eines haptischen Hinweises oder eine Audioausgabeeinrichtung zum Ausgeben eines hörbaren oder, mit anderen Worten, akustischen Hinweises.

Als ein allgemeiner Aspekt von sowohl dem Verfahren als auch der Anordnung ist darauf hinzuweisen, dass die berührungsempfindliche Schnittstelle dauerhaft in dem Fahrzeug verbaut sein kann. Sie kann beispielsweise Bestandteil eines Infotainmentsystems sein oder ein solches bereitstellen. Es ist aber auch möglich, dass die berührungsempfindliche Schnittstelle unabhängig von dem eigentlichen Kraftfahrzeug ausgebildet und beispielsweise lediglich selektiv hiermit (insbesondere mit einer Steuereinrichtung hiervon) datenübertragend gekoppelt wird. In diesem Fall kann die berührungsempfindliche Schnittstelle beispielsweise durch ein mobiles Endgerät und insbesondere ein Mobiltelefon (Smartphone) bereitgestellt werden und/oder von einem solchen umfasst sein. Ein Nutzer kann vorzugsweise über ein entsprechend gekoppeltes Endgerät Eingaben tätigen, auf deren Basis das Kraftfahrzeug und/oder wenigstens eine hiervon umfasste Steuereinrichtung ansteuerbar ist. Auch in einem solchen Fall können sämtliche hierin geschilderten Maßnahmen und Aspekte vorgesehen sein, insbesondere das zumindest vorübergehende Sperren der Nutzereingabe und/oder automatische Aktivieren (und/oder Hinweisen) von (bzw. auf) alternative Eingabemöglichkeiten.

Ausführungsbeispiele der Erfindung werden im Folgenden anhand der beigefügten schematischen Figuren erläutert:
- Fig. 1: zeigt eine schematisch stark vereinfachte Teilansicht eines Fahrzeuginnenraums, wobei das Fahrzeug eine Anordnung gemäß einem erfindungsgemäßen Beispiel aufweist, mit der Verfahren gemäß erfindungsgemäßen Varianten ausführbar sind.
- Fig. 2: zeigt ein Ablaufschema eines beispielhaften erfindungsgemäßen Verfahrens, das mit der Anordnung aus Fig. 1 ausführbar ist.

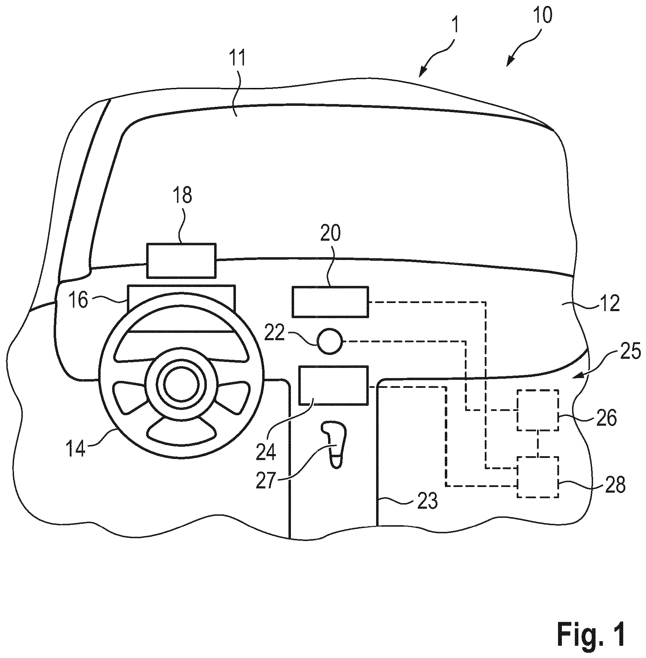

In Fig. 1 ist ein Teil eines Innenraums eines Fahrzeugs 1 gezeigt. Der Innenraum umfasst eine erfindungsgemäße Anordnung 10. Die Ansicht aus Fig. 1 entspricht der Ansicht auf eine Windschutzscheibe 11 (von innen) sowie auf eine Konsole bzw. ein Armaturenbrett, die dem Fahrer und einem Beifahrer zugewandt sind. Beispielhaft gezeigt ist die Position eines Lenkrads 14 sowie eines dahinter befindlichen Kombiinstruments 16 und/oder einer bevorzugt digitalen Anzeigetafel. Oberhalb hiervon ist eine optionale Head-up-Displayeinrichtung 18 gezeigt. Dabei kann an der dargestellten Position dieser Einrichtung 18 ein virtueller Inhalt eingeblendet werden und/oder kann ausgehend von der Einheit 18 eine Projektion dieses Inhalts an die Innenfläche der Windschutzscheibe 11 erfolgen.

Ferner gezeigt ist eine beispielhafte Gestenerfassungseinrichtung 20. Diese umfasst eine langgestreckte horizontale Fläche mit nicht näher dargestellter näherungsempfindlicher Sensorik. Wenn ein Nutzer seine Hand entlang der Fläche bewegt, kann dies als eine Geste erfasst werden. Auch jegliche anderen bekannten Varianten einer an sich lediglich optionalen Gestenerfassungseinrichtung 20 können vorgesehen sein.

Im Bereich einer Mittelkonsole 23 ist ferner eine berührungsempfindliche Schnittstelle 14 in Form eines herkömmlichen Touchscreens gezeigt. Mittels dieser Schnittstelle 14 sind verschiedene Funktionsmenüs aufrufbar sowie damit assoziierte virtuelle Bedienelemente anzeigbar. Durch Berühren desjenigen Bereichs der Schnittstelle, in dem diese Bedienelemente eingeblendet werden, können hiermit verknüpfte Aktionen ausgeführt und/oder veranlasst werden. Lediglich der Vollständigkeit halber ist auch die Position eines Gangwahlhebels 27 angedeutet.

Ferner gezeigt ist ein Mikrofon 22. Dieses ist Bestandteil einer Spracherkennungseinrichtung 25, welche ferner ein strichliert angedeutetes Steuergerät 26 umfasst. Eine signalübertragende Verbindung zwischen dem Mikrofon 22 und dem Steuergerät 26 ist ebenfalls gestrichelt angedeutet. Die Position des Steuergeräts 26 ist lediglich schematisch. Dieses ist bevorzugt nicht unmittelbar im Fahrzeuginnenraum angeordnet bzw. zugänglich, sondern, wie durch die gestrichelte Darstellung angedeutet, verdeckt und beispielsweise hinter Verkleidungsteilen verborgen. Die Spracherkennungseinrichtung 25 ist in herkömmlicher Weise dazu eingerichtet, Sprachbefehle eines Nutzers und insbesondere des Fahrzeugfahrers zu erfassen und damit verknüpfte Steuerbefehle zu erzeugen und/oder Maßnahmen zu veranlassen.

Ebenso gezeigt ist eine (zentrale) Steuereinrichtung 28 der Anordnung 10. Diese ist wiederum gestrichelt angedeutet, da sie nicht unmittelbar im Fahrzeuginnenraum angeordnet, sondern allgemein verborgen bzw. verdeckt sein kann. Die Steuereinrichtung 28 kann in jegliche anderweitige Steuereinrichtung des Fahrzeugs 10 integriert sein. Sie kann auch das Steuergerät 26 der Spracherkennungseinrichtung 25 umfassen oder von diesem umfasst sein. Weiter kann die Steuereinrichtung 28 als verteilte Steuereinrichtung mit mehreren miteinander kommunizierenden und/oder zusammenwirkenden Steuergeräten ausgebildet sein.

In der gezeigten Varianten ist die Steuereinrichtung 28 mit der Schnittstelle 24 verbunden sowie auch mit der Spracherkennungseinrichtung 25 und der Gestenerfassungseinrichtung 20 (siehe jeweilige strichliert angedeutete Datenverbindungen). Jegliche hierin geschilderten Verbindungen der Steuereinrichtung 28 zu anderen Einheiten können auch mittelbar über das Anschließen der Steuereinrichtung 28 an einen Kommunikationsbus (insbesondere einen CAN-Bus) des Fahrzeugs 1 erfolgen. Nicht gesondert gezeigt ist eine datenübertragende Verbindung zu dem Kombiinstrument 16 oder der Head-up-Displayeinrichtung 18, die direkt oder mittelbar über den geschilderten Kommunikationsbus erfolgen kann. Ebenso nicht dargestellt sind gesonderte Verbindungen zu Umgebungssensoren des Fahrzeugs 1, zu Speichereinrichtungen mit Datensammlungen (die allgemein sowohl fahrzeugintern als auch fahrzeugextern bereitgestellt sein können) oder einem optionalen mobilen Endgerät, das vorliegend nicht gesondert dargestellt ist.

In der gezeigten Variante ist die Steuereinrichtung 28 allgemein dazu eingerichtet, eine aktuell anstehende bzw. erwartete Nutzereingabe zu ermitteln, die mittels der berührungsempfindlichen Schnittstelle 24 erfolgen soll. Daraufhin ermittelt die Steuereinrichtung 28 eine aktuell zulässige maximale Eingabezeit auf Basis jeglicher hierin geschilderten Ansätze und/oder Eigenschaften. Wie vorstehend erläutert, kann sie hierfür z.B. auf Kartendaten (einer nicht gesondert gezeigten Speichereinrichtung und/oder eines fahrzeugexternen Datenservers) zugreifen, auf Wettereigenschaften (z.B. durch Abrufen eines entsprechenden Onlinedienstes), auf Verkehrssituationseigenschaften (z.B. durch Erhalten von Messwerten von Umgebungssensoren) oder durch Erfassen von Betriebszuständen wenigstens eines Fahrerassistenzsystems.

Ebenso ist die Steuereinrichtung 28 aber dazu eingerichtet, die erwartete Eingabezeit des Fahrers zu ermitteln. Auch hierfür können jegliche hierin offenbarten Ansätze verwendet werden und kann die Steuereinrichtung 28 insbesondere nutzerspezifische Daten und/oder einen Aufmerksamkeitskennwert erhalten oder ermitteln.

Die Unzulässigkeit der Nutzereingabe wird vorliegend dann erkannt, wenn die erwartete Eingabezeit die maximal zulässige Eingabezeit übersteigt. Dann erzeugt die Steuereinrichtung 28 einen Hinweis betreffend vorzugsweise die Nicht-Verfügbarkeit der Eingabe mittels der berührungsempfindlichen Schnittstelle 24 (beispielsweise durch Ausgrauen oder allgemein Ausblenden von dortigen virtuellen Bedienelementen). Hierdurch (oder allgemein durch Nicht-Einblenden berührungsempfindlicher virtueller Bedienelemente) kann die berührungsempfindliche Schnittstelle 24 allgemein bezüglich der erwarteten Nutzereingabe (oder auch bezüglicher jeglicher Nutzereingabe) gesperrt oder, mit anderen Worten, deaktiviert werden.

Vorzugsweise ist die Steuereinrichtung 28 aber ebenso dazu eingerichtet, einen Hinweis betreffend eine alternativ zu verwendende Eingabemöglichkeit auszugeben. Vorliegend erfolgt dies bevorzugt durch Anzeigen eines entsprechenden Hinweises auf bzw. mit dem Kombiinstrument 16 oder aber der Head-up-Displayeinrichtung 18. Zusätzlich oder alternativ kann ein solcher Hinweis aber durch Ausgabe einer Audioinformation insbesondere unter Benennung der alternativ zu verwendenden Eingabemöglichkeit erfolgen.

In dem gezeigten Beispiel sind die alternativen Eingabemöglichkeiten in Form der Gestenerfassungseinrichtung 20 bereitgestellt, was jedoch lediglich optional ist. Eine allgemein bevorzugte alternative Eingabemöglichkeit ist in Form der Spracherkennungseinrichtung 25 (oder auch Sprachbefehlserfassungseinheit) bereitgestellt. Die Spracherkennungseinrichtung 25 ist allgemein derart betreibbar, dass nach Erfassen bzw. Erkennen eines vordefinierten Aktivierungs-Sprachbefehls weitere Sprachbefehle unmittelbar für eine Umsetzung hiermit verknüpfter Aktionen erfassbar sind. Vorliegend kann jedoch der optionale erstgenannte Aktivierungs-Sprachbefehl ausbleiben und kann die Steuereinrichtung 28 die Spracherkennungseinrichtung 25 unmittelbar in den hiermit assoziierten Zustand versetzen, in dem jegliche weiteren Sprachbefehle unmittelbar erfasst und in hiermit verknüpfte Steueraktionen umsetzbar sind.

Vorteilhafterweise ist zudem vorgesehen, dass die alternative Eingabemöglichkeit automatisch einen solchen Zustand (Eingabezustand) aufweist, annimmt oder an einen solchen anknüpft, wie ihn die berührungsempfindliche Schnittstelle 24 vor deren Sperrung aufgewiesen hat. Mit anderen Worten können mittels der alternativen Eingabemöglichkeiten unmittelbar diejenigen Funktionsmenüs, Bedienaktionen oder Eingabeoptionen bereitgestellt und/oder betätigbar sein, die mittels der Schnittstelle 24 vor deren Sperrung betätigbar waren. Hat sich der Nutzer z.B. durch ein Bedienmenü oder allgemein einen Entscheidungsbaum oder eine anderweitige definierte Struktur oder Abfolge von Bedienaktionen hindurchnavigiert und erfolgt dann eine Sperrung der berührungsempfindlichen Schnittstelle 24, kann daraufhin vorteilhafterweise unmittelbar durch automatisches Aktivieren der alternativen Eingabemöglichkeit an der Stelle bzw. mit einer solchen Eingabe und/oder Betätigung fortgesetzt werden, die auch mit der berührungsempfindlichen Schnittstelle 24 prinzipiell vor deren Sperrung bedienbar gewesen wäre.

Anders ausgedrückt kann der Nutzer mittels der Eingabemöglichkeit unmittelbar und/oder nahtlos mit der Betätigung fortfahren, die er ursprünglich mittels der berührungsempfindlichen Schnittstelle 24 vornehmen wollte. Hierfür kann ein aktueller Zustand der berührungsempfindlichen Schnittstelle 24 insbesondere betreffend dort aufgerufene Funktionsmenüs und/oder eingeblendete Bedienelemente erfasst werden. Anschließend kann die Gestenerfassungseinrichtung 20 oder aber die Spracherkennungseinrichtung 25 derart aktiviert werden und/oder kann ein solcher Betriebszustand hiervon eingestellt werden, dass analoge Bedienungen oder Betätigungen besonders präzise erfassbar sind und/oder mit den (gesperrten) virtuellen Bedienelementen der Schnittstelle 24 verknüpfte Aktionen unmittelbar hiermit betätigbar sind.

Im Falle der Spracherfassungseinrichtung 24 kann hierfür eine Spracherkennung für erwartete Sprachbefehle sensibilisiert werden (d.h. hierfür insbesondere sensibler eingestellt werden und/oder die erwarteten Sprachbefehle als mit einer hohen Wahrscheinlichkeit gewichtete Ergebnisse der Spracherkennung definieren). Im Fall der Gestenerkennung 20 kann z.B. eine erkennbare vorbestimmte Geste mit einer laut berührungsempfindlicher Schnittstelle 24 erwarteten bzw. verknüpften bedienbaren Aktion assoziiert werden.

Die ausgegebenen Hinweise können entsprechend angepasst werden. Beispielsweise kann dem Benutzer mitgeteilt werden, welche Geste er durchführen soll, um ein mittels der berührungsempfindlichen Schnittstelle 24 nicht länger bedienbares Bedienelement und/oder eine hiermit verknüpfte Aktion betätigen bzw. aktivieren zu können.

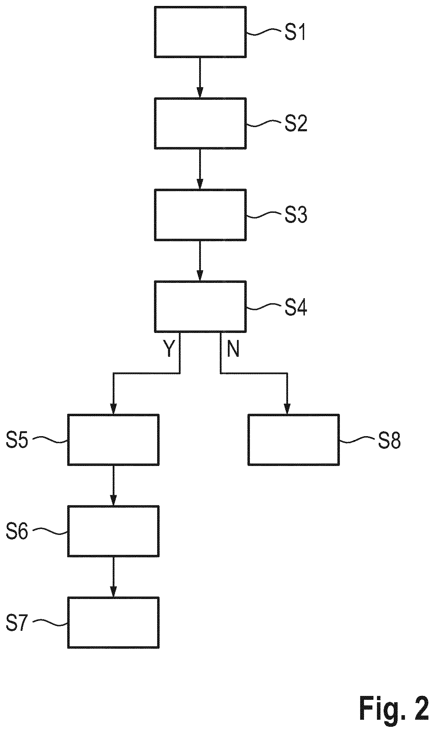

Anhand von Fig. 2 wird im Folgenden ein mit der Anordnung 10 aus Fig. 1 prinzipiell ausführbarer Verfahrensablauf geschildert. In einem Schritt S1 wird ermittelt, dass der Fahrer mittels der berührungsempfindlichen Schnittstelle 24 eine Eingabe voraussichtlich tätigen möchte. Dies kann z.B. dann erkannt werden, wenn der Fahrer ein Funktionsmenü einer mittels der Schnittstelle 24 betätigbaren Funktionseinheit des Fahrzeugs 1 aufruft, beispielsweise ein Audiomenü, ein Klimatisierungsmenü, ein Navigationsmenü, ein Fahrzeugeinstellungsmenü oder dergleichen.

In einem Schritt S2 ermittelt die Steuereinrichtung 28 daraufhin eine erwartete Eingabezeit, beispielsweise je nach dem aufgerufenen Funktionsmenü, d.h. je nach der Art der erwarteten Eingabe. Sämtliche weiteren Eigenschaften, Größen oder Zustände des allgemeinen Beschreibungsteils oder der Figurenbeschreibung können, allein oder in beliebiger Kombination, in diesem Zusammenhang ebenfalls zum Ermitteln der erwarteten Eingabezeit berücksichtigt werden.

In einem Schritt S3, der auch vor dem Schritt S2 oder zumindest teilweise zeitgleich hierzu ausführbar ist, wird eine maximal zulässige Eingabezeit ermittelt. Hierfür erfasst die Steuereinrichtung 28 jegliche hierin geschilderten Eigenschaften oder Betriebszustände, allein oder in beliebiger Kombination.

In einem Schritt S4 werden daraufhin die erwartete Eingabezeit und die maximal zulässige Eingabezeit miteinander verglichen. Übersteigt die erwartete Eingabezeit die zulässige Eingabezeit (Pfeil Y), wird in einem Schritt S5 die Betätigbarkeit der berührungsempfindlichen Schnittstelle 24 beschränkt. Genauer gesagt wird diese für die Vornahme der erwarteten Nutzereingabe (oder auch allgemein für jegliche Eingabe) gesperrt, insbesondere durch Nicht-Einblenden von vom Fahrer betätigbaren virtuellen Bedienelementen und/oder durch Berührungsunempfindlich-Schalten derartiger Bedienelemente.

In einem Schritt S6 wird anschließend ein Hinweis jeglicher hierin geschilderten Art erläutert, die den Nutzer über die Sperrung der Schnittstelle 24 in Kenntnis setzt und möglichst auch über die alternativ zu verwendende Eingabemöglichkeit. Erfolgt daraufhin die Nutzereingabe über eine solche Eingabemöglichkeit, wie beispielsweise mittels der Gestensteuerung 20 oder aber der Spracherkennungseinrichtung 25, kann daraufhin die vom Nutzer eigentlich ursprünglich beabsichtigte Betätigung bzw. hiermit verknüpfte Aktion vorgenommen bzw. aktiviert werden.

Wird im Schritt S4 hingegen erkannt, dass die erwartete Eingabezeit unterhalb der zulässigen Eingabezeit liegt oder diese zumindest nicht übersteigt (Pfeil N), wird gemäß Schritt S8 die berührungsempfindliche Schnittstelle 24 nicht gesperrt und eine Betätigung hiervon durch den Nutzer registriert sowie eine damit assoziierte Aktion umgesetzt bzw. ausgeführt.

### Bezugszeichenliste

- 1: Kraftfahrzeug/Fahrzeug
- 10: Anordnung
- 11: Windschutzscheibe
- 12: Armaturenbrett
- 14: Lenkrad
- 16: Kombiinstrument
- 18: Head-up-Displayeinrichtung
- 20: Gestenerfassungseinrichtung
- 22: Mikrofon
- 23: Mittelkonsole
- 24: berührungsempfindliche Schnittstelle (Schnittstelle)
- 25: Spracherkennungseinrichtung
- 26: Steuergerät
- 27: Gangwahlhebel

## Patentansprüche

1. Verfahren zum Erfassen von Nutzereingaben in einem Kraftfahrzeug (1), mit:
- Ermitteln eines Zustandes, in dem eine Nutzereingabe mittels einer berührungsempfindlichen Schnittstelle (24) unzulässig ist;
und in Reaktion darauf
- Sperren der Möglichkeit zur Vornahme der Nutzereingabe mittels der berührungsempfindlichen Schnittstelle (24);
und wobei das Verfahren zusätzlich wenigstens eine der folgenden Maßnahmen umfasst:
a) automatisches Aktivieren wenigstens einer alternativen Eingabemöglichkeit (20, 25) zur Vornahme der Nutzereingabe unabhängig von der berührungsempfindlichen Schnittstelle (24);
b) Ausgeben eines Hinweises an den Nutzer zur Vornahme der Nutzereingabe mittels einer alternativen Eingabemöglichkeit (20, 25), die unabhängig von der berührungsempfindlichen Schnittstelle (24) ist,
wobei die Unzulässigkeit der Nutzereingabe unter Berücksichtigung einer maximal zulässigen Eingabezeit und einer erwarteten Eingabezeit ermittelt wird, wobei die Unzulässigkeit der Nutzereingabe dann ermittelt wird, wenn die erwartete Eingabezeit die maximal zulässige Eingabezeit übersteigt.

2. Verfahren nach Anspruch 1,
**dadurch gekennzeichnet, dass** die alternative Eingabemöglichkeit (20, 25) eine Spracherkennung umfasst.

3. Verfahren nach Anspruch 1 oder 2,
**dadurch gekennzeichnet, dass** die alternative Eingabemöglichkeit (20, 25) eine Gestenerfassung umfasst.

4. Verfahren nach einem der vorangehenden Ansprüche,
**dadurch gekennzeichnet, dass** die alternative Eingabemöglichkeit einen solchen Eingabezustand aufweist, wie ihn die berührungsempfindliche Schnittstelle vor deren Sperren aufgewiesen hat oder aufgewiesen hätte.

5. Verfahren nach einem der vorangegangenen Ansprüche,
**dadurch gekennzeichnet, dass** die maximal zulässige Eingabezeit auf Basis von wenigstens einer/einem der Folgenden ermittelt wird:
- einer Verkehrswegeigenschaft;
- einer Wettereigenschaft;
- einer Verkehrssituationseigenschaft;
- einem Betriebszustand von wenigstens einem Fahrerassistenzsystem;
- einem Automatisierungsgrad von wenigstens einem Fahrerassistenzsystem;
- einer Einstellung von wenigstens einem Fahrerassistenzsystem.

6. Verfahren nach einem der vorangegangenen Ansprüche,
**dadurch gekennzeichnet, dass** die erwartete Eingabezeit auf Basis von wenigstens einer/einem der Folgenden ermittelt wird:
- einem Alter des Nutzers;
- einem Aufmerksamkeitskennwert des Nutzers;
- einer Art der erwarteten Eingabe;
- historische Daten betreffend Eingabezeiten eines konkreten Nutzers.

7. Anordnung zum Erfassen von Nutzereingaben in einem Kraftfahrzeug (1), aufweisend:
eine berührungsempfindliche Schnittstelle (24);
eine von der berührungsempfindlichen Schnittstelle (24) unabhängig bedienbare Eingabeeinrichtung (20, 25);
eine Steuereinrichtung (28), die dazu eingerichtet ist, einen Zustand zu ermitteln, in dem eine Nutzereingabe mittels einer berührungsempfindlichen Schnittstelle (24) unzulässig ist, in Reaktion darauf die Möglichkeit zur Vornahme der Nutzereingabe mittels der berührungsempfindlichen Schnittstelle (24) zu sperren,
und ferner dazu eingerichtet ist, wenigstens eine der folgenden Maßnahmen zu veranlassen:
a) automatisches Aktivieren wenigstens einer alternativen Eingabemöglichkeit (20, 25) zur Vornahme der Nutzereingabe unabhängig von der berührungsempfindlichen Schnittstelle (24);
b) Ausgeben eines Hinweises an den Nutzer zur Vornahme der Nutzereingabe mittels einer alternativen Eingabemöglichkeit (20, 25), die unabhängig von der berührungsempfindlichen Schnittstelle (25) ist,
wobei die Steuereinrichtung (28) weiter derart ausgebildet ist, dass die Unzulässigkeit der Nutzereingabe unter Berücksichtigung einer maximal zulässigen Eingabezeit und einer erwarteten Eingabezeit ermittelt wird, wobei die Unzulässigkeit der Nutzereingabe dann ermittelt wird, wenn die erwartete Eingabezeit die maximal zulässige Eingabezeit übersteigt.

## Claims

1. Method for detecting user inputs in a motor vehicle (1), comprising:
- determining a state in which a user input via a touch-sensitive interface (24) is not permitted;
and in response thereto
- blocking the option for performing the user input via the touch-sensitive interface (24);
and wherein the method additionally includes at least one of the following measures:
a) automatically activating at least one alternative input option (20, 25) for performing the user input independently of the touch-sensitive interface (24);
b) outputting a message to the user to perform the user input via an alternative input option (20, 25) that is independent of the touch-sensitive interface (24),
wherein the impermissibility of the user input is determined taking into account a maximum permissible input time and an expected input time, wherein the impermissibility of the user input is determined if the expected input time exceeds the maximum permissible input time.

2. Method according to claim 1,
**characterized in that** the alternative input option (20, 25) includes speech recognition.

3. Method according to claim 1 or 2,
**characterized in that** the alternative input option (20, 25) includes gesture detection.

4. Method according to any of the preceding claims,
**characterized in that** the alternative input option has an input state such as the one the touch-sensitive interface had or would have had before being blocked.

5. Method according to any of the preceding claims,
**characterized in that** the maximum permissible input time is determined based on at least one of the following:
- a traffic route characteristic;
- a weather characteristic;
- a traffic situation characteristic;
- an operating state of at least one driver assistance system;
- a level of automation of at least one driver assistance system;
- a setting of at least one driver assistance system.

6. Method according to any of the preceding claims,
**characterized in that** the expected input time is determined based on at least one of the following:
- the user's age;
- the user's attention score;
- the type of expected input;
- historical data concerning the input times of a specific user.

7. Arrangement for detecting user inputs in a motor vehicle (1), having:
a touch-sensitive interface (24);
an input device (20, 25) that can be operated independently of the touch-sensitive interface (24);
a control device (28) which is configured to determine a state in which a user input via a touch-sensitive interface (24) is not permitted, in response thereto to block the option of performing the user input via the touch-sensitive interface (24), and which is further configured to initiate at least one of the following measures:
a) automatically activating at least one alternative input option (20, 25) for performing the user input independently of the touch-sensitive interface (24);
b) outputting a message to the user to perform the user input via an alternative input option (20, 25) that is independent of the touch-sensitive interface (25),
wherein the control device (28) is further designed such that the impermissibility of the user input is determined taking into account a maximum permissible input time and an expected input time, wherein the impermissibility of the user input is determined if the expected input time exceeds the maximum permissible input time.

## Revendications

1. Procédé de détection de saisies d'utilisateur dans un véhicule automobile (1), comportant :
- la détermination d'un état dans lequel une saisie d'utilisateur par le biais d'une interface tactile (24) n'est pas admissible ;
et en réaction à cela
- le blocage de la possibilité d'effectuer une saisie d'utilisateur par le biais de l'interface tactile (24) ;
et dans lequel le procédé comprend en outre au moins l'une des mesures suivantes :
a) activation automatique d'au moins une possibilité de saisie alternative (20, 25) pour effectuer la saisie d'utilisateur indépendamment de l'interface tactile (24) ;
b) émission d'une instruction à l'intention de l'utilisateur pour qu'il effectue la saisie d'utilisateur par le biais d'une possibilité de saisie alternative (20, 25) qui est indépendante de l'interface tactile (24),
dans lequel l'inadmissibilité de la saisie d'utilisateur est déterminée en tenant compte d'un temps de saisie maximal admissible et d'un temps de saisie attendu, dans lequel l'inadmissibilité de la saisie d'utilisateur est alors déterminée lorsque le temps de saisie attendu dépasse le temps de saisie maximal admissible.

2. Procédé selon la revendication 1,
**caractérisé en ce que** la possibilité de saisie alternative (20, 25) comprend une reconnaissance vocale.

3. Procédé selon la revendication 1 ou 2,
**caractérisé en ce que** la possibilité de saisie alternative (20, 25) comprend une détection de geste.

4. Procédé selon l'une des revendications précédentes,
**caractérisé en ce que** la possibilité de saisie alternative présente un état de saisie tel que l'interface tactile le présentait ou l'aurait présenté avant son blocage.

5. Procédé selon l'une des revendications précédentes,
**caractérisé en ce que** le temps de saisie maximal autorisé est déterminé sur la base d'au moins l'un des éléments suivants :
- une propriété de voie de circulation ;
- une caractéristique météorologique ;
- une caractéristique de situation de circulation ;
- un état de fonctionnement d'au moins un système d'assistance au conducteur ;
- un degré d'automatisation d'au moins un système d'assistance au conducteur ;
- un réglage d'au moins un système d'assistance au conducteur.

6. Procédé selon l'une des revendications précédentes,
**caractérisé en ce que** le temps de saisie attendu est déterminé sur la base d'au moins l'un des éléments suivants :
- un âge de l'utilisateur ;
- une valeur caractéristique d'attention de l'utilisateur ;
- un type de saisie attendue ;
- des données historiques concernant des temps de saisie d'un utilisateur concret.

7. Agencement de détection de saisies d'utilisateur dans un véhicule automobile (1), présentant :
une interface tactile (24) ;
un dispositif de saisie (20, 25) pouvant être utilisé indépendamment de l'interface tactile (24) ;
un dispositif de commande (28) qui est conçu pour déterminer un état dans lequel une saisie d'utilisateur par le biais d'une interface tactile (24) est inadmissible, pour bloquer en réaction à cela la possibilité d'effectuer la saisie d'utilisateur par le biais de l'interface tactile (24), et est conçu en outre pour provoquer au moins l'une des mesures suivantes :
a) activation automatique d'au moins une possibilité de saisie alternative (20, 25) pour effectuer la saisie d'utilisateur indépendamment de l'interface tactile (24) ;
b) émission d'une instruction à l'intention de l'utilisateur pour qu'il effectue la saisie d'utilisateur par le biais d'une possibilité de saisie alternative (20, 25) qui est indépendante de l'interface tactile (25),
dans lequel le dispositif de commande (28) est en outre conçu de telle sorte que l'inadmissibilité de la saisie d'utilisateur est déterminée en tenant compte d'un temps de saisie maximal admissible et d'un temps de saisie attendu, dans lequel l'inadmissibilité de la saisie d'utilisateur est alors déterminée lorsque le temps de saisie attendu dépasse le temps de saisie maximal admissible.
